# EUROPÄISCHE PATENTSCHRIFT

(11) **EP 0 477 505 B1**
(45) Veröffentlichungstag und Bekanntmachung des Hinweises auf die Patenterteilung: **04.12.1996**
(21) Anmeldenummer: 91113007.8
(22) Anmeldetag: 02.08.1991
(51) Int. Cl.: B32B 3/12, B22F 1/00, B32B 18/00, C04B 35/80

(54) **Verfahren zur Herstellung von Sandwichstrukturen aus faserverstärkter Keramik**
Process for the production of layered structures of fiber reinforced ceramic
Procédé de fabrication de céramique à structure lamellaire renforcée par des fibres

(30) Priorität: 27.09.1990 DE 4030529
(43) Veröffentlichungstag der Anmeldung: 01.04.1992
(73) Patentinhaber: DORNIER GMBH, D-88004 Friedrichshafen (DE)
(72) Erfinder: Ostertag, Rolf, Dr., W-7772 Oberuhldingen (DE); Haug, Tilmann, Dr., W-7778 Markdorf (DE); Renz, Richard, Dipl.-Ing., W-7997 Immenstaad (DE); Zankl, Wolfgang, Dipl.-Ing., W-7990 Friedrichshafen (DE)
(74) Vertreter: Landsmann, Ralf, Dipl.-Ing.

(56) Entgegenhaltungen:
- WO-A-88/04607
- US-A- 4 461 796

## Beschreibung

Die Erfindung betrifft ein Verfahren zur Herstellung von Sandwichstrukturen aus faserverstärkter Keramik.

Sandwichstrukturen, bestehend aus Wabenkern und Deckschichten, werden bevorzugt als leichte Bauelemente von hoher Steifigkeit eingesetzt. Die Ausgangsstoffe zur ihrer Herstellung umfassen bisher zumeist Metalle und Kunststoffe, deren Temperaturbeständigkeit für spezielle Anwendungen, z.B. in der Raumfahrt, nicht ausreichend ist.

Der Erfindung liegt die Aufgabe zugrunde, ein Verfahren zur Herstellung eines Bauteils zu entwickeln, welches bei guten Festigkeitseigenschaften eine hohe Beständigkeit gegen erhöhte Temperaturen (T > 700° C), Korrosion und Oxidation aufweist.

Diese Aufgabe wird erfindungsmäßig durch ein Verfahren mit den Merkmalen des Anspruch 1 gelöst. Ausführungen der Erfindung und das erzeugte Bauteil sind Gegenstände weiterer Ansprüche.

Zur Herstellung von Wabenkern und Deckschicht werden anorganische Fasern auf der Basis von SiO₂, Al₂O₃, C, SiC (z.B. Nextel-, Tyranno-, Nicalon-, C-Fasern) mit einem Schlicker aus Si-organischen Polymeren (z.B. Silane Silazane und/oder Siloxane), die mit einem keramischen oder metallischen Pulver versetzt sind (z.B. SiC, Al₂O₃, Mullit, Si₃N₄,Glas oder SiO₂, Metalle), imprägniert. Der Anteil der keramischen oder metallischen Pulver beträgt hierbei bevorzugt 10 - 70 Vol %. Die Teilchengröße der Pulver liegt im Bereich von unter 20 µm.
Der Faseranteil gemessen am Gesamtvolumen des Bauteils beträgt etwa 20 bis 80 Vol. %.

### Herstellung der Deckschichten

Hierzu werden bei Raumtemperatur die anorganischen Fasern in einem speziellen Tränkbad mit dem Schlicker imprägniert und auf einem Wickelkern so abgelegt, daß ein Prepreg entsteht. Das Prepreg kann entweder unidirektional gestaltet werden, oder es kann die Faserorientierung unter beliebigen Winkeln angeordnet werden. Die Prepregs werden durch Übereinanderschichten zu Formkörpern definierter Dicke und Faserorientierung laminiert. Die Prepregs können nicht nur durch Wickeln von Fasern, sondern auch durch die Imprägnation von Geweben aus den oben genannten Fasern hergestellt werden.
Im nächsten Herstellungsschritt erfolgt das Verpressen der laminierten Prepregs unter Autoklavbedingungen oder in einer heizbaren Presse bei erhöhtem Druck und Temperatur, wodurch das Si-organische Polymer aushärtet. Die bevorzugten Werte für Druck und Temperatur liegen dabei zwischen 150 - 300 ° C und zwischen 10 - 50 bar.

### Herstellung der Wabenkerne

Die anorganischen Fasern werden bei Raumtemperatur mit dem Schlicker imprägniert. Anschließend wird eine Vielzahl von Wickelkernen entsprechender Geometrie mit den imprägnierten Fasern bewickelt. Die Wickelkerne werden danach in einem geeigneten Preßwerkzeug aufeinandergeschichtet und unter Autoklavbedingungen oder in einer heizbaren Presse so verpreßt, daß ein Wabenkern entsteht. Unter den erhöhten Drücken und Temperaturen härtet das Si-organische Polymer aus. Die Aushärtung kann wahlweise vollständig oder nur teilweise erfolgen, erlaubt aber in jedem Fall das Ausformen der Wickelkerne. Die Vernetzung erfolgt bevorzugt zwischen 150 - 300 ° C bei Drücken zwischen 10 - 50 bar. Der Wabenkern kann in klassischer Weise mechanisch bearbeitet oder sphärisch verformt werden.

**Herstellung der Sandwichstrukturen**
1. Vorgefertigte Deckschichten und Wabenkerne
   Der vorgefertigte Wabenkern wird bedarfsgerecht zwischen den Deckschichten angeordnet und in einer Klebe- bzw. Härtevorrichtung (Autoklav oder Heizpresse) abgelegt. Die Härtungsbedingungen sind so gewählt, daß die teilweise vernetzte (gehärtete) präkeramische Matrix in den Deckschichten und im Wabenkern wieder plastisch werden und die Teile ohne ein zusätzliches Bindemittel verbinden kann.
   Alternativ dazu können auch vollständig ausgehärtete Deckschichten und Wabenkerne durch den Einsatz eines geeigneten Bindemittels (z.B. Si-Polymer mit oder ohne keramisches Pulver, temperaturbeständige anorganische Kleber) gefügt werden. In diesem Fall werden die Eigenschaften des Verbundkörpers durch die thermomechanischen Eigenschaften des Klebemittels mitbestimmt.
2. Teilintegrale Lösung
   Eine Deckschicht wird gemäß der obigen Beschreibung gefertigt. Der Wabenkern und die zweite Deckschicht werden wie oben beschrieben gefertigt, jedoch nicht gehärtet, die Wickelkerne verbleiben in den Waben zellen.
   Die nicht ausgehärtete Deckschicht und der Wabenkern werden gemeinsam in einem Werkzeug zu einem Verbund gepreßt und angehärtet. Anschließend werden die Wickelkerne aus den Wabenzellen entfernt. Nach einer evtl. notwendigen mechanischen Bearbeitung der offenen Wabenseite wird die vorgefertigte Deckschicht wie unter Punkt 1 beschrieben, aufgebracht.
3. Vollintegrale Lösung
   Beide Deckschichten und der Wabenkern werden in nicht ausgehärtetem Zustand gefügt, unter erhöhtem Druck und Temperatur ausgehärtet und die Wickelkerne als verlorene Kerne durch entsprechende Aussparungen nach mechanischen, chemischen oder physikalischen Methoden entfernt.

Nach dem Fügen zur Gesamtstruktur schließt sich jeweils eine drucklose Pyrolysebehandlung in sauerstoffreier Atmosphäre an, durch die die vernetzte präkeramische Matrix in einen keramischen Stoff umgewandelt wird. Die Temperaturen liegen dabei im Bereich von 1000 ° C - 1500 ° C.

Das durch das Verfahren gewonnene Bauteil kann von ebener oder gekrümmter Form sein und ist auch großformatig herstellbar.

Die mit der Erfindung erzielten Vorteile bestehen insbesondere darin, daß die Herstellung von keramischen Sandwichstrukturen durch die Anwendung gängiger Methoden der Kunststoffverarbeitung ermöglicht wird.
Desweiteren ist das keramische Sandwichbauteil bei guter Festigkeit wesentlich beständiger gegen Korrosion, Oxidation und hohe Temperaturen als Metalle oder Kunststoffbauteile gleicher Art. Es weist eine gegenüber monolithischen Keramiken erhöhte Bruchzähigkeit auf.
Bisher wurden röhrenförmige Bauteile mit rundem oder quadratischem Querschnitt sowie Platten aus faserverstärkter Keramik gefertigt, die eine gute Festigkeit (ca. 150 MPa) bei bidirektionaler Faserorientierung zeigen. Weiterhin wurde nachgewiesen, daß das Material gegen Oxidation bei 1100° C und Reduktion unter H₂ bei 1000° C stabil ist. Die Hochtemperaturfestigkeit bis 1100° C ist ebenfalls nachgewiesen.

## Patentansprüche

1. Verfahren zur Herstellung einer Sandwichstruktur mit Deckschichten und Wabenkern aus faserverstärkter Keramik, mit den Verfahrensschritten
- Imprägnieren anorganischer Fasern oder Gewebe mit einem Schlicker aus Si-organischen Polymeren und einem keramischen oder metallischen Pulver
- Formgebung von Deckschichten und Wabenkern mittels Wickel- und Laminiertechnik
- Druck- und Temperaturbehandlung von Deckschichten und Wabenkern zur Vernetzung (Härten) des organischen Polymers
- Fügen zur Gesamtstruktur durch besagte Vernetzung und/oder durch zusätzliche Bindemittel nach der Vernetzung
- drucklose Pyrolyse zur Umwandlung in einen keramischen Stoff.

2. Verfahren nach Anspruch 1, **dadurch gekennzeichnet,** daß die Formgebung des Wabenkerns beliebiger Zellengeometrie nach folgenden Verfahrensschritten abläuft:
- die imprägnierten Gewebe oder Fasern werden auf einen Formkern entsprechender Wabengeometrie gelegt oder gewickelt,
- die Formkerne werden in einem geeigneten Werkzeug aufeinandergeschichtet.

3. Verfahren nach Anspruch 1, **dadurch gekennzeichnet,** daß die Formgebung einer Deckschicht nach folgenden Verfahrensschritten abläuft:
- die imprägnierten Gewebe oder Fasern werden auf einen Formkern gelegt oder gewickelt, so daß ein Prepreg entsteht.
- die Prepregs werden zu Formkörpern definierter Dicke und Faserorientierung laminiert.

4. Verfahren nach Anspruch 1, **dadurch gekennzeichnet,** daß die Deckschichten und der Wabenkern separat über eine Druck- und Temperaturbehandlung vollständig vernetzt und durch geeignete Bindemittel zur Gesamtstruktur gefügt werden.

5. Verfahren nach Anspruch 1, **dadurch gekennzeichnet,** daß die Deckschichten und der Wabenkern separat über eine Druck- und Temperaturbehandlung teilweise vernetzt und durch vollständige Vernetzung zur Gesamtstruktur gefügt werden.

6. Verfahren nach Anspruch 1, **dadurch gekennzeichnet,** daß eine Deckschicht und der Wabenkern über eine Druck- und Temperaturbehandlung bei teilweiser Vernetzung gefügt und in einem weiteren Schritt zusammen mit der anderen, ebenfalls teilweise vernetzten Deckschicht durch vollständiges Vernetzen zur Gesamtstruktur gefügt werden.

7. Verfahren nach Anspruch 1, **dadurch gekennzeichnet,** daß eine Deckschicht und der Wabenkern über eine Druck- und Temperaturbehandlung bei vollständiger Vernetzung gefügt und in einem weiteren Schritt mit der anderen vollständig vernetzten Deckschicht durch geeignete Bindemittel zur Gesamtstruktur gefügt werden.

8. Verfahren nach Anspruch 1, **dadurch gekennzeichnet,** daß die beiden unvernetzten Deckschichten und der ebenfalls unvernetzte Wabenkern über eine Druck- und Temperaturbehandlung durch vollständige Vernetzung zur Gesamtstruktur gefügt werden.

9. Sandwichstruktur aus faserverstärkter Keramik, **dadurch gekennzeichnet,** daß diese durch ein Verfahren nach mindestens einem der Ansprüche 1 bis 8 hergestellt ist.

## Claims

1. Process for the manufacture of a composite structure having cover layers and a honeycomb core from a fibre-reinforced ceramic material, having the process steps
- impregnation of inorganic fibres or fabrics with a slip of Si-organic polymers and a ceramic or metallic powder;
- shaping of cover layers and honeycomb core by means of winding and lamination techniques;
- pressure and temperature treatment of cover layers and honeycomb core for crosslinking (curing) the organic polymer;
- joining to form a complete structure by the said crosslinking and/or by additional binders after crosslinking
- pressureless pyrolysis for conversion into a ceramic material.

2. Process according to claim 1, characterised in that the shaping of the honeycomb core of any desired cell geometry takes place in accordance with the following process steps:
- the impregnated fabrics or fibres are laid or wound onto a mould core of appropriate honeycomb geometry;
- the mould cores are layered on top of one another in a suitable tool.

3. Process according to claim 1, characterised in that the shaping of a cover layer takes place in accordance with the following process steps:
- the impregnated fabrics or fibres are laid or wound onto a mould core so that a prepreg is formed;
- the prepregs are laminated to form shaped bodies of specific thickness and fibre orientation.

4. Process according to claim 1, characterised in that the cover layers and the honeycomb core are completely crosslinked separately by means of a pressure and temperature treatment and are joined by suitable binders to form the complete structure.

5. Process according to claim 1, characterised in that the cover layers and the honeycomb core are partially crosslinked separately by means of a pressure and temperature treatment and are joined to form the complete structure by complete crosslinking.

6. Process according to claim 1, characterised in that a cover layer and the honeycomb core are joined, with partial crosslinking, by means of a pressure and temperature treatment and, in a further step, are joined together with the other likewise partially crosslinked cover layer by complete crosslinking to form the complete structure.

7. Process according to claim 1, characterised in that a cover layer and the honeycomb core are joined, with complete crosslinking, by means of a pressure and temperature treatment and, in a further step, are joined to the other completely crosslinked cover layer by suitable binders to form the complete structure.

8. Process according to claim 1, characterised in that the two uncrosslinked cover layers and the likewise uncrosslinked honeycomb core are joined to form the complete structure by complete crosslinking by means of a pressure and temperature treatment.

9. Sandwich structure of fibre-reinforced ceramics, characterised in that it is manufactured by a process according to at least one of claims 1 to 8.

## Revendications

1. Procédé de fabrication d'une structure en sandwich avec des couches extérieures et une âme en nid d'abeilles en céramique renforcée par des fibres, comprenant les étapes suivantes :
- imprégnation de fibres ou de tissu inorganiques avec une barbotine composée de polymères organiques à base de Si et d'une poudre céramique ou métallique
- mise en forme des couches extérieures et de l'âme en nid d'abeilles par les techniques d'enroulement filamentaire et de stratification
- traitement des couches extérieures et de l'âme en nid d'abeilles par la mise en oeuvre de pression et de chaleur afin de réticuler (durcir) le polymère organique
- assemblage de la structure complète au moyen de ladite réticulation et/ou au moyen de liants supplémentaires après la réticulation
- pyrolyse sans pression en vue d'une transformation en un matériau céramique.

2. Procédé selon la revendication 1, caractérisé en ce que la mise en forme de l'âme en nid d'abeilles à géométrie cellulaire quelconque se déroule selon les étapes suivantes :
- le tissu ou les fibres imprégnés sont posés ou enroulés sur un mandrin de moulage possédant une géométrie en nid d'abeilles correspondante,
- les mandrins de moulage sont superposés dans un outil approprié.

3. Procédé selon la revendication 1, caractérisé en ce que la mise en forme d'une couche extérieure se déroule selon les étapes suivantes :
- le tissu ou les fibres imprégnés sont posés ou enroulés sur un mandrin de moulage, de façon à obtenir un préimprégné.
- les préimprégnés sont stratifiés pour obtenir des corps moulés possédant une épaisseur et une orientation de fibres définies.

4. Procédé selon la revendication 1, caractérisé en ce que les couches extérieures et l'âme en nid d'abeilles sont entièrement réticulées séparément par un traitement à la pression et à la chaleur et assemblées sous la forme d'une structure complète à l'aide de liants appropriés.

5. Procédé selon la revendication 1, caractérisé en ce que les couches extérieures et l'âme en nid d'abeilles sont partiellement réticulées séparément par un traitement à la pression et à la chaleur et assemblées sous la forme d'une structure complète par réticulation complète.

6. Procédé selon la revendication 1, caractérisé en ce qu'une couche extérieure et l'âme en nid d'abeilles sont assemblées par un traitement à la pression et à la chaleur en étant partiellement réticulées et, lors d'une étape extérieure, sont assemblées avec l'autre couche extérieure, elle aussi partiellement réticulée, par réticulation complète pour obtenir une structure complète.

7. Procédé selon la revendication 1, caractérisé en ce qu'une couche extérieure et l'âme en nid d'abeilles sont assemblées par un traitement à la pression et à la chaleur en étant complètement réticulées et, lors d'une étape ultérieure, sont assemblées avec l'autre couche extérieure complètement réticulée à l'aide de liants appropriés pour obtenir la structure complète.

8. Procédé selon la revendication 1, caractérisé en ce que les deux couches extérieures non réticulées et l'âme en nid d'abeilles elle aussi non réticulée sont assemblées, au moyen d'un traitement à la pression et à la chaleur, par réticulation complète pour obtenir la structure complète.

9. Structure sandwich en céramique renforcée par des fibres, caractérisée en ce qu'elle est réalisée par un procédé selon au moins une des revendications 1 à 8.
